Europäisches Patentamt

European Patent Office

Office européen des brevets

(19)

(11) Veröffentlichungsnummer : **0 026 503**
**B1**

(12) # EUROPÄISCHE PATENTSCHRIFT

(45) Veröffentlichungstag der Patentschrift :
14.09.83

(51) Int. Cl.³ : **B 23 K  1/16**

(21) Anmeldenummer : **80200754.2**

(22) Anmeldetag : **08.08.80**

(54) Vorrichtung und Verfahren zum Herstellen der Lötnähte von Rohrbögen.

(30) Priorität : 28.09.79 DE 2939319

(43) Veröffentlichungstag der Anmeldung :
08.04.81 Patentblatt 81/14

(45) Bekanntmachung des Hinweises auf die Patenterteilung : 14.09.83 Patentblatt 83/37

(84) Benannte Vertragsstaaten :
AT BE CH DE FR GB IT LI LU NL

(56) Entgegenhaltungen :
DE A 1 955 989
DE A 2 752 732
DE C 1 136 757
FR A 2 320 806
US A 1 750 312
US A 4 054 069

(73) Patentinhaber : RHEINZINK GMBH
Bahnhofstrasse 90 Postfach 1452
D-4354 Datteln (DE)

(72) Erfinder : Emmrich, Peter
Kreuzstrasse 333
D-4370 Marl (DE)
Erfinder : Marx, Hans
Ricarda-Huch-Strasse 49
D-4370 Marl (DE)
Erfinder : Pretzel, Klaus
Zum Dahl 7b
D-4670 Lünen (DE)

(74) Vertreter : Fischer, Ernst, Dr.
Reuterweg 14
D-6000 Frankfurt am Main 1 (DE)

Vorrichtung und Verfahren zum Herstellen der Lötnähte von Rohrbögen

Die Erfindung betrifft eine Vorrichtung und ein Verfahren zum Herstellen der Lötnähte von aus Halbschalen gebildeten Rohrbögen, bestehend aus einem die gleiche Krümmung wie die Rohrbögen aufweisenden Lötbalken, auf den die aus Blechstreifen von NE-Metallen bogenförmig vorgeformten Halbschalen aufspannbar sind, deren Längsränder sich im Bereich der durchgelöteten Lötnähte, gegenüber denen eine bewegbare Lötvorrichtung zum Zusammenführen der sich überdeckenden Längsränder der Halbschalen angeordnet ist, überdecken, wobei eine Zentrier- und Kalibriervorrichtung für die Halbschalen vorgesehen ist, und in achsparallelen Ausnehmungen des Lötbalkens heb-/senkbar angeordnete Anschlagleisten für den Anschlag der Längsränder der einen Halbschale angeordnet sind.

Bekanntlich werden aus handelsüblichen NE-Blechen, vorzugsweise aus Zinkblechen, bestehende, bogenförmig vorgeformte Halbschalen zur Herstellung von Rohrbögen zusammengesetzt und im Bereich ihrer sich überdeckenden Längsnähte mit angesetztem Lot durch Spalt- oder Fugenlöten miteinander verbunden. Beim Spaltlöten darf der maximale Abstand des Lötspaltes im Bereich der Überlappung 0,5 mm nicht überschreiten, um durch den kapillaren Fülldruck eine maximale Spaltfüllung des Lötspaltes zu ermöglichen. Das wird jedoch nur unvollkommen erreicht, da in aller Regel eine Lötverbindung nur in einem vergleichsweise schmalen Flächenstreifen entlang der Längsränder der Halbschalen erfolgt. Beim Fugenlöten ist der Abstand der zu lötenden Flächen ≥ 0,5 mm, wodurch keine Kapillarwirkung eintritt. Eine Lötverbindung erfolgt ebenfalls nur entlang eines vergleichsweise schmalen Flächenstreifens der Längsränder der Halbschalen. Darüber hinaus weist eine solche Lötverbindung ein grobporiges Lotgußgefüge mit nur geringen Festigkeiten auf. Abgesehen davon, daß die durch Spalt- — oder Fugenlöten erzeugten Lötnähte — gemessen an den Forderungen des Verbrauchers eine unvollkommene Lötverbindung darstellen, ist der entscheidende Nachteil jedoch darin zu sehen, daß solche Lötnähte von Hand hergestellt werden müssen, was mit einem beträchtlichen Arbeitsaufwand und einem hohen Verbrauch an Lötmaterial verbunden ist.

Bei einer Lötvorrichtung der eingangs genannten Gattung nach DE-A-2 532 447 werden im Bereich ihrer sich überdeckenden Längsränder innen auf der einen und/oder außen auf der anderen Seite vorverzinnte Rohrbogenhalbschalen verwendet, wobei die vorverzinnten Längsränder aufeinandergepreßt und die Lötnaht über zugeführte Wärme hergestellt wird. Durch diese Maßnahmen lassen sich qualitativ und quantitativ verbesserte Rohrbögen weitgehend automatisch herstellen, nachteilig ist jedoch, daß die Festigkeit des auf diese Weise hergestellten Lotgußgefüges über die Länge der Lötnähte erheblichen Schwankungen unterworfen ist.

Der Erfindung liegt nun die Aufgabe zugrunde, die Vorrichtung und das Verfahren der eingangs genannten Art so zu gestalten, daß die Lötnähte zwischen den Rohrbogenhalbschalen in einfacher und verbesserter Weise herstellbar sind.

Zur Lösung dieser Aufgabe wird erfindungsgemäß eine Vorrichtung vorgeschlagen, bei der gegenüber den Überdeckungen der Längsränder der Halbschalen achsparallel angeordnete heb-/senkbare, profilierte Lötkämme sowie neben den Lötkämmen achsparallel angebrachte, heb-/senkbare gegenüber den im Lötbalken angeordneten Anschlagleisten weitere um die Breite der Überdeckung der Längsränder versetzte weitere Anschlagleisten für den Anschlag der Längsränder der anderen Halbschale angebracht sind und daß ein Teil der Zentrier- und Kalibrierungsvorrichtung an dem einen Ende des Lötbalkens fest angeordnet und ein anderer Teil vor das andere Ende des Lötbalkens schwenkbar ist, wobei die Anschlagleisten zur Aufnahme von eingelegtem Lot ausgebildet sind.

Die Lötkämme, die neben den Lötkämmen angebrachten Anschlagleisten sowie die im Lötbalken befindlichen Anschlagleisten sind zweckmäßigerweise mit üblichen hydraulischen oder pneumatischen Trieben, insbesondere Druckluftzylindern, verbunden.

Die in den Ausnehmungen des Lötbalkens befindlichen Anschlagleisten sind über eine im Lötbalken horizontal verschiebbar angebrachte Spreizvorrichtung heb-/senkbar.

Gegenüber den Enden des Lötbalkens sind vor die Stirnseiten des Lötbalkens fahrbare Lötbandzuführeinrichtungen vorgesehen, mit deren Hilfe das Lötmaterial, vorzugweise das profilierte Lötband, in die eine und in die andere zwischen den sich überdeckenden Längsrändern der Halbschalen gebildeten Fugen einführbar ist.

Seitlich von den Lötkämmen sind achsparallel sich erstreckende auf die Überdeckungsbereiche der Längsränder der Halbschalen gerichtete Brenner für die Zufuhr der für das Löten notwendigen Wärme angebracht.

Um ein schnelles Abkühlen der hergestellten Lötnähte zu erzielen, ist das Anbringen von auf die Abdeckungsbereiche der Halbschalen gerichteten Kühlluftelementen sinnvoll.

Nach einem besonderen Merkmal der Erfindung sind die Rohrbogenhalbschalen unter Verwendung von Greifern auf den Lötbalken aufsetzbar.

Im Rahmen der besonderen Ausgestaltung der Erfindung sind die Spannvorrichtung für die Halbschalen, die Lötbandzuführeinrichtung und die Brenner in aufeinander folgenden Stationen angeordnet, wobei die Aufspannvorrichtung über einen Getriebemotor oder dgl. verfahrbar ist.

Die Stationen können entweder in Linie oder karussellartig hintereinander angeordnet sein. Im ersten Fall ist die Aufspannvorrichtung mittels einer Spindel oder dgl. aus der Aufspannstation über die Lötbandzuführstation zu der Lötstation und von dort zurück in die Aufspannstation verfahrbar, während im zweiten Fall die Aufspannvorrichtung mittels einer Kette, eines Zahnkranzes, eines Schrittgetriebes oder dgl. verfahrbar und gegebenenfalls der Einsatz mehrerer Aufspannvorrichtungen möglich ist.

Dabei kann es zweckmäßig sein, der Brennerstation wenigstens eine Kühlluftstation sowie gegebenenfalls eine besondere Station für die Entnahme der gelöteten Rohrbögen nachzuordnen.

Bei dem Verfahren zum Betrieb der Vorrichtung werden die Rohrbogenhalbschalen unter Zuhilfenahme der, im Lötbalken in bekannter Anordnung (DE-A-2 532 447) angebrachten Anschlagleisten und der neben den Lötkämmen angebrachten Anschlagleisten sowie der Zentrier- und Kalibriervorrichtung auf den Lötbalken aufgespannt und durch Heben der im Lötbalken befindlichen Anschlagleisten zwischen den sich überdeckenden Längsrändern der Halbschalen Fugen gebildet, das Lötband in die Fugen eingeführt und in bekannter Weise (DE-A-2 532 447) die Fugen durch Absenken der im Lötbalken angeordneten Anschlagleisten geschlossen, die Längsränder durch Absenken der Lötkämme aufeinander gedrückt und die Lötnaht durch über die Brenner zugeführte Wärme hergestellt.

Die mit der erfindungsgemäßen Vorrichtung und dem Verfahren zum Betrieb der Vorrichtung erzielten Vorteile bestehen, insbesondere darin, daß die eine große Festigkeit erbringenden durchgelöteten Nähte, deren Überdeckungsbreite der gebundenen Lötnahtbreite entspricht, auf der gesamten Länge und Breite der Überdeckung ein einheitliches, fehlerfreies feinporiges Lotgußgefüge aufweisen, wobei gleichzeitig eine Lötmaterialersparnis von wenigstens 50 % und einer Ersparnis an Arbeitsaufwand von annähernd 60 % erzielt werden.

Die Erfindung ist in den Zeichnungen beispielhaft dargestellt und wird nachfolgend näher erläutert. Es zeigen :

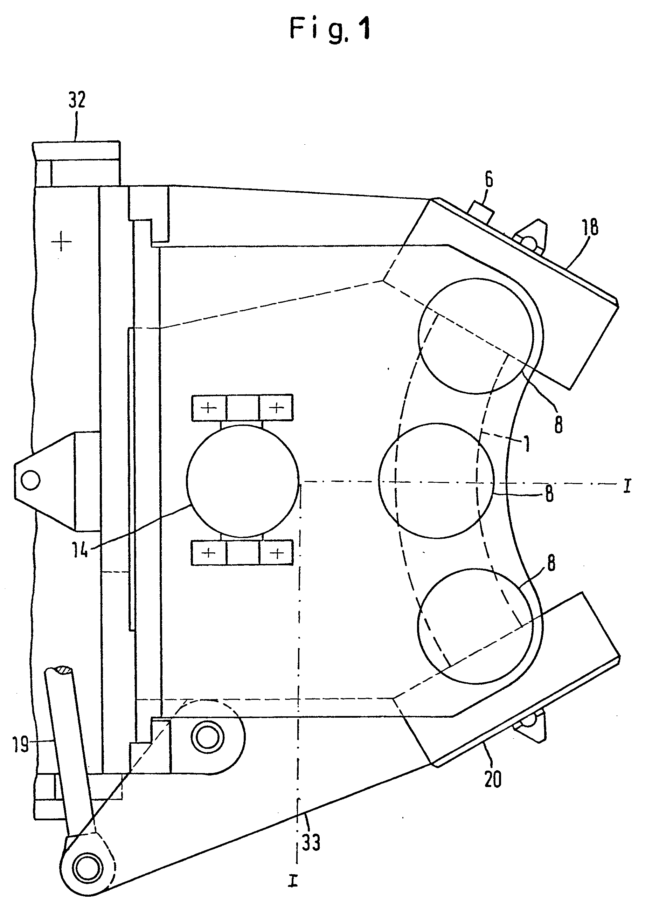

Figur 1 eine Draufsicht auf die erfindungsgemäße Vorrichtung.

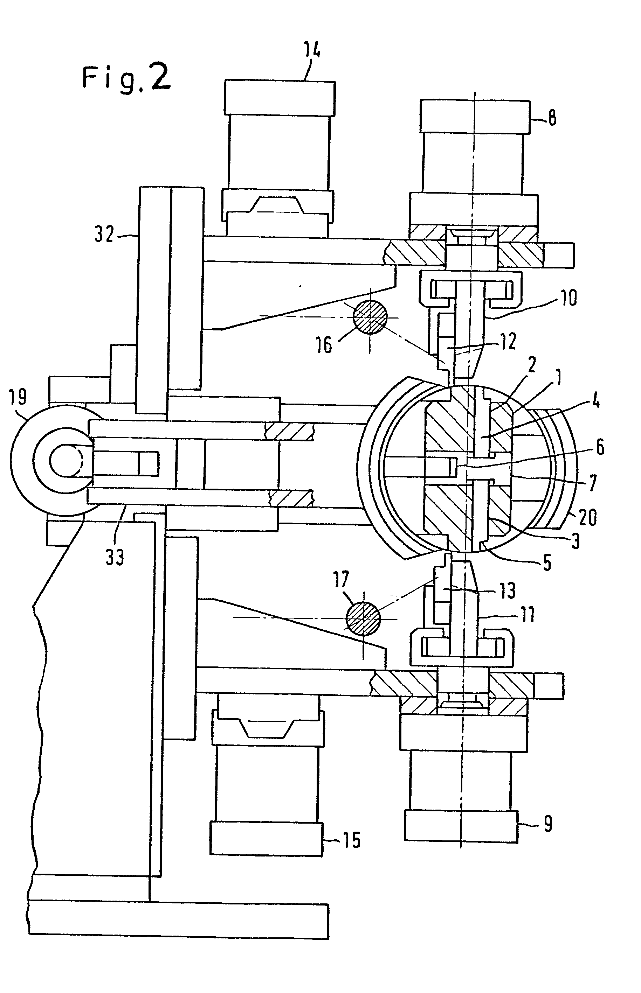

Figur 2 eine Teilseitenansicht sowie ein Teilquerschnitt entlang der Schnittlinie I-I der Fig. 1.

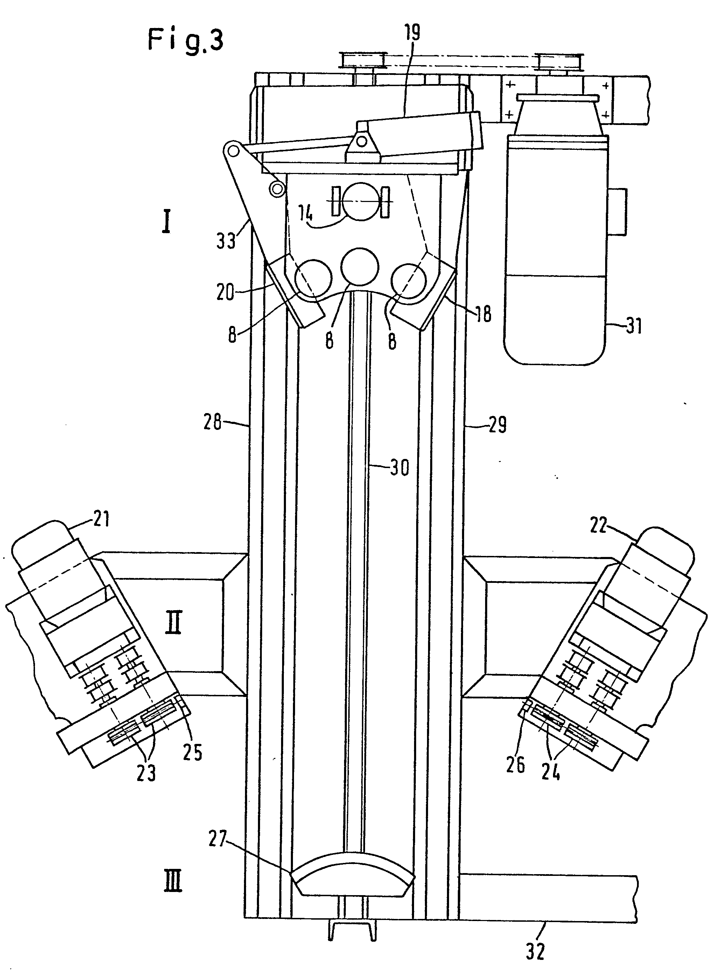

Figur 3 eine Draufsicht auf die in Aufspannstation, Lötbandzuführstation und Lötstation aufgeteilte Vorrichtung.

In dem Lötbalken 1, der die gleiche Krümmung wie die herzustellenden Rohrbögen aufweist, sind in den achsparallelen Ausnehmungen 2, 3, die Anschlagleisten 4, 5 für den Anschlag der innenliegenden Längsränder der Außenrohrbogenhalbschale angeordnet, die über die mit Hilfe eines an dem Riegel 6 angreifenden Druckluftzylinders im Lötbaken horizontal verschiebbare Spreizeinrichtung 7 heb-/senkbar sind. Gegenüber den Überdeckungsbereichen der Längsränder der Rohrbogenhalbschalen befinden sich achsparallel angeordnete, mit Hilfe der Zylinder 8, 9 heb-/senkbare profilierte Lötkämme 10, 11, an denen die Anschlagleisten 12, 13 angebracht sind, welche gegenüber den im Lötbalken 1 befindlichen Anschlagleisten 4, 5 um die Breite der Überdeckung der Längsränder der Rohrbogenhalbschalen horizontal versetzt angeordnet sind und den Anschlag für die außenliegenden Längsränder der Innenrohrbogenhalbschale bilden. Die Anschlagleisten 12, 13 sind mit Hilfe der Zylinder 14, 15 über die Hebel 16, 17 heb-/senkbar. An dem einen Ende des Lötbalkens 1 befindet sich der fest angeordnete Teil 18 und an dem anderen Ende des Lötbalkens der über den Zylinder 19 schwenkbare Teil 20 der Zentrier- und Kalibriervorrichtung, mit deren Hilfe die auf den Lötbalken 1 aufgesetzten Rohrbogenhalbschalen fest aufspannbar sind.

Durch Verschieben der Spreizvorrichtung 7 werden die Anschlagleisten 4, 5 so auseinander gedrückt, daß zwischen den Überdeckungen der Längsränder der Rohrbogenhalbschalen Fugen entstehen, in die das profilierte Zinnlötband von den über die Motoren 21, 22 angetriebenen Profilrollformern 23, 24 im Radius gleichzeitig eingeschoben und mittels der Profilscheren 25, 26 abgetrennt wird. Durch Absenken der Anschlagleisten 4, 5 werden die Fugen geschlossen und die sich überdeckenden Längsränder der Rohrbogenhalbschalen durch Absenken der Lötkämme 10, 11 aufeinander gepreßt. Über die Brenner 27 wird den Überdeckungsbereichen die für die Herstellung der Lötnähte erforderliche Wärme zugeführt.

Die auf den Führungen 28, 29 verfahrbar gelagerte Aufspannvorrichtung wird nach dem Aufspannen der Rohrbogenhalbschalen aus der Startposition I mittels der Spindel 30, die über den Getriebemotor 31 angetrieben, in die Position II gefahren wird, in der mit Hilfe der vor die Stirnseiten des Lötbalkens 1 geschwenkten Lötbandzuführeinrichtungen das profilierte Zinnlötband in die zwischen den sich überdeckenden Längsränder der Rohrbogenhalbschalen gebildeten Fugen eingeführt wird. Danach wird die Aufspannvorrichtung in die Position III gefahren, in der über die Brenner 27 den Überdeckungsbereichen der Längsränder der Rohrbogenhalbschalen die für das Löten notwendige Wärme zugeführt wird. Nach erfolgter Lötung fährt die Aufspannvorrichtung in die Startposition I zurück, in der nach Ausschwenken des an dem Schwenkarm 33 befestigten Teils 20 der Zentrier- und Kalibriervorrichtung und Heben der Lötkämme 10, 11 der fertig gelötete Rohrbogen vom Lötbalken 1 abgezogen wird. Die gesamte erfindungsgemäße Vorrichtung ist auf einen Grundrahmen 32 montiert.

**Ansprüche**

1. Vorrichtung zum Herstellen der Lötnähte von aus Halbschalen gebildeten Rohrbögen, bestehend aus einem die gleiche Krümmung wie die Rohrbögen aufweisenden Lötbalken (1), auf den die aus Blechstreifen von NE-Metallen bogenförmig vorgeformten Halbschalen aufspannbar sind, deren Längsränder sich im Bereich der durchgelöteten Lötnähte, gegenüber denen eine bewegbare Lötvorrichtung (8-11) zum Zusammenführen der sich überdeckenden Längsränder der Halbschalen angeordnet ist, überdecken, wobei eine Zentrier- und Kalibriervorrichtung (18, 20) für die Halbschalen vorgesehen ist und in achsparallelen Ausnehmungen (2, 3) des Lötbalkens heb-/senkbar angeordnete Anschlagleisten (4, 5) für den Anschlag der Längsränder der einen Halbschale angeordnet sind, dadurch gekennzeichnet, daß gegenüber den Überdeckungen der Längsränder der Halbschalen achsparallel angeordnete heb-/senkbare, profilierte Lötkämme (10, 11) sowie neben den Lötkämmen achsparallel angebrachte, heb-/senkbare gegenüber den im Lötbalken befindlichen Anschlagleisten (4, 5) um die Breite der Überdeckung versetzte weitere Anschlagleisten (12, 13) für den Anschlag der Längsränder der anderen Halbschale angebracht sind und daß ein Teil (18) der Zentrier- und Kalibriervorrichtung an dem einen Ende des Lötbalkens fest angeordnet und ein anderer Teil (20) vor das andere Ende des Lötbalkens schwenkbar ist, wobei die Anschlagleisten (4, 5, 12, 13) zur Aufnahme von eingelegtem Lot ausgebildet sind.

2. Vorrichtung nach Anspruch 1, gekennzeichnet durch mit den Anschlagleisten (4, 5 ; 12, 13) und den Lötkämmen (10, 11) verbundene hydraulische oder pneumatische Triebe (8, 9 ; 14, 15), vorzugsweise Druckluftzylinder.

3. Vorrichtung nach den Ansprüchen 1 und 2, gekennzeichnet durch eine im Lötbalken (1) verschiebbar gelagerte Spreizvorrichtung (7) für das Heben und Senken der im Lötbalken befindlichen Anschlagleisten (4, 5).

4. Vorrichtung nach den Ansprüchen 1 bis 3, gekennzeichnet durch vor die Stirnseiten des Lötbalkens (1) fahrbare Lötbandzuführeinrichtungen (21, 22), mit deren Hilfe das Lötmaterial, vorzugsweise profiliertes Lötband, in die zwischen den sich überdeckenden Längsrändern der Halbschalen gebildeten Fugen einführbar ist.

5. Vorrichtung nach den Ansprüchen 1 bis 4, gekennzeichnet durch seitlich von den Lötkämmen (10, 11) achsparallel angeordnete auf die Überdeckungsbereiche der Längsränder der Halbschalen gerichtete Brenner (27).

6. Vorrichtung nach den Ansprüchen 1 bis 5, gekennzeichnet durch auf die Überdeckungsbereiche der Längsränder der Halbschalen gerichtete Kühlluftelemente.

7. Vorrichtung nach den Ansprüchen 1 bis 6, gekennzeichnet durch die Halbschalen auf den Lötbalken (1) aufsetzende Greifer.

8. Vorrichtung nach einem oder mehrerer der Ansprüche 1 bis 7, dadurch gekennzeichnet, daß die über einen Getriebemotor (31) oder dgl. verfahrbare Aufspannungvorrichtung für die Halbschalen, die Lötbandzuführvorrichtungen (21, 22) und die Brenner (27) in aufeinander folgenden Stationen (I, II, III) angeordnet sind.

9. Vorrichtung nach Anspruch 8, dadurch gekennzeichnet, daß die Stationen (I, II, III) in Linie angeordnet und die Aufspannvorrichtung mittels einer Kette, eines Zahnkranzes, eines Schrittgetriebes oder dgl. verfahrbar ist.

10. Vorrichtung nach Anspruch 8, dadurch gekennzeichnet, daß die Stationen (I, II, III) karusselartig angeordnet und die Aufspannvorrichtung mittels einer Kette, eines Zahnkranzes, eines Schrittgetriebes oder dgl. verfahrbar ist.

11. Vorrichtung nach Anspruch 10, gekennzeichnet durch mehrere Aufspannvorrichtungen.

12. Vorrichtung nach den Ansprüchen 10 und 11, gekennzeichnet durch wenigstens eine der Lötstation (III) nachgeordnete Kühlstation.

13. Vorrichtung nach den Ansprüchen 10 bis 12, gekennzeichnet durch eine der Kühlstation nachgeordnete Entnahmestation.

14. Verfahren zum Betrieb der Vorrichtung nach einem oder mehreren der Ansprüche 1 bis 12, wobei die Halbschalen unter Zuhilfenahme der im Lötbalken (1) angebrachten Anschlagleisten (4, 5) sowie der beiden Teile der Zentrier- und Kalibriervorrichtung auf den Lötbalken aufgespannt werden und durch Heben der im Lötbalken befindlichen Anschlagleisten zwischen den sich überdeckenden Längsrändern Fugen gebildet, das Lötband in die Fugen eingeführt und die Längsränder durch Absenken der Lötkämme (10, 11) aufeinander gedrückt und die Lötnaht durch über die Brenner (27) zugeführte Wärme hergestellt wird.

## Claims

1. Apparatus for producing soldered seams in tube bends consisting of half-shells, comprising a mandrel (1), which has the same curvature as the tube bend and on which the arcuate half-shells preformed form non-ferrous metal strip and having longitudinal edges which overlap adjacent to the seams to be soldered in full width are adapted to be fixed, adjacent said seams a movable soldering device (8 to 11) for bringing together the overlapping seams of the half-shells is arranged, a centering and sizing device (18, 20) is provided for the half-shells and in axially parallel apertures (2, 3) of mandrel extensible and retractable stop bars (4, 5) for the stop of the longitudinal edge portions of the one half-shell are disposed characterized in that adjacent the overlappings of the longitudinal edge portions of the half-shells axially parallel, extensible and retractable, profiled soldering combs (10, 11) and besides the soldering combs axially parallel, extensible and retractable stop bars (12, 13) are arranged which are spaced from the stop bars (4, 5) in the mandrel by the width of overlapping and are engageable with the longitudinal edge portions of the other half-shell, whereby the stop bars (4, 5, 12, 13) formed for holding the inserted solder and that one part (18) of the centering and sizing device is fixed to one end of the mandrel and the other part (20) is pivotally movable to the other end of the mandrel.

2. Apparatus according to claim 1, characterized by hydraulic or pneumatic actuators (8, 9 ;

14, 15), preferably compressed air cylinders, which are connected to the stop bars (4, 5 ; 12, 13) and the soldering combs (10, 11).

3. Apparatus according to claims 1 and 2, characterized by a spreading device (7) which is slidably mounted in the mandrel (1) and serves to extend and retract the stop bars (4, 5) in the mandrel.

4. Apparatus according to claims 1 to 3, characterized by strip feeders (21, 22), which are movable to face the end faces of the mandrel (1) and operable to introduce the solder consisting preferably of a profiled solder strip into the clearances formed between the overlapping longitudinal edge portions of the half-shells.

5. Apparatus according to claims 1 to 4, characterized by axially parallel burners (27), which are arranged beside the soldering combs (10, 11) and directed to the overlapping longitudinal edge portions of the half-shells.

6. Apparatus according to claims 1 to 5, characterized by means for directing cooling air to the overlapping longitudinal edge portions of the half-shells.

7. Apparatus according to claims 1 to 6, characterized by grippers for applying the half-shells to the mandrel (1).

8. Apparatus according to any of claims 1 to 7, characterized in that the work holder for holding the half-shells, the strip feeders (21, 22) and the burners (27) are arranged in consecutive stations (I, II, III) and the work holder is movable by means of a gearmotor (31) or the like.

9. Apparatus according to claim 8, characterized in that the stations (I, II, III) are arranged along a straight line and the work holder is movable by means of a chain, a gear, a stepping mechanism or the like.

10. Apparatus according to claim 8, characterized in that the stations (I, II, III) are arranged in a circle and the work holder is movable by means of a chain, a gear, a stepping mechanism or the like.

11. Apparatus according to claim 10, characterized by the provision of a plurality of work holders.

12. Apparatus according to claims 10 and 11, characterized by at least one cooling station, which succeeds the soldering station (III).

13. Apparatus according to claims 10 to 12, characterized by a taking station, which succeeds the cooling station.

14. A method of operating the apparatus according to any of claims 1 to 12, characterized in that the half-shells are fixed to the mandrel (1) by means of the stop bars (4, 5) in the mandrel, and the two parts of the centering and sizing device, said stop bars in the mandrel are extended to form clearance between the overlapping edge portions, the solder strip is introduced into the clearances, the soldering combs (10, 11) are extended to force the longitudinal edge portions against each other and the soldered seam is made under the action of heat supplied by the burners (27).

## Revendications

1. Dispositif de préparation des cordons de soudure de coudes de tuyaux formés d'hémicoquilles, constitué d'une barre de soudage (1) présentant la même courbure que les couches de tuyaux et sur laquelle peuvent être bloquées les hémicoquilles, qui sont précintrées à partir de bandes de tôle métallique non ferreuse et dont les bords longitudinaux se recouvrent dans la région des cordons de soudure soudés, en face desquels est disposé un dispositif mobile de soudage (8 à 11) pour réunir les bords longitudinaux se recouvrant des hémicoquilles, un dispositif de centrage et de calibrage (18, 20) des hémicoquilles étant prévu et des baguettes de butée (4, 5) pour les bords longitudinaux de l'une des hémicoquilles étant disposées, avec possibilité de s'élever et de s'abaisser, dans des cavités (2, 3) parallèles à l'axe de la barre de soudage, caractérisé en ce qu'en face des parties à recouvrement des bords longitudinaux des hémicoquilles sont fixés, en étant disposés parallèlement à l'axe, des peignes de soudage (10, 11) profilés pouvant s'élever et s'abaisser ainsi que d'autres baguettes de butée (11, 13) pour les bords longitudinaux de l'autre hémicoquille, qui sont fixées parallèlement à l'axe à côté des peignes de soudage, qui peuvent s'élever et s'abaisser par rapport aux baguettes de butée (4, 5) se trouvant dans la barre de soudage et qui sont décalées de la largeur du recouvrement, et en ce qu'une partie (18) du dispositif de centrage et de calibrage est montée fixe sur l'une des extrémités de la barre de soudage, tandis qu'une autre partie (20) peut pivoter devant l'autre extrémité de la barre de soudage, les baguettes de butée (4, 5, 12, 13) étant agencées pour la réception de métal à souder introduit.

2. Dispositif suivant la revendication 1, caractérisé par des dispositifs d'entraînement (8, 9 ; 14, 15) hydrauliques ou pneumatiques, de préférence des vérins à air comprimé, reliés aux baguettes de butée (4, 5 ; 12, 13) et aux peignes de soudage.

3. Dispositif suivant les revendications 1 et 2, caractérisé par un dispositif d'écartement (7) monté coulissant dans la barre de soudage (1) et destiné à élever et à abaisser les baguettes de butée (4, 5) se trouvant dans la barre de soudage.

4. Dispositif suivant les revendications 1 à 3, caractérisé par des dispositifs mobiles d'amenée de la barre à souder (21, 22), devant les faces frontales de la barre de soudage (1), à l'aide desquels la matière à souder, de préférence une bande profilée à souder, peut être introduite dans les joints formés entre les bords longitudinaux se recouvrant des hémicoquilles.

5. Dispositif suivant les revendications 1 à 4, caractérisé par une torche (27) qui est disposée parallèlement à l'axe à côté des peignes de soudage (10, 11) et qui est dirigée sur les régions de recouvrement des bords longitudinaux des hémicoquilles.

6. Dispositif suivant les revendications 1 à 5, caractérisé par des éléments à air de refroidissement dirigés sur les régions de recouvrement des bords longitudinaux des hémicoquilles.

7. Dispositif suivant les revendications 1 à 6, caractérisé par des organes de préhension mettant les hémicoquilles sur la barre de soudage (1).

8. Dispositif suivant l'une ou plusieurs des revendications 1 à 7, caractérisé en ce que le dispositif de blocage des hémicoquilles, qui peut être déplacé par un motoréducteur (31) ou une machine semblable, les dispositifs d'amenée de la bande à souder (21, 22) et le chalumeau (27) sont disposés en des postes (I, II, III) qui se succèdent.

9. Dispositif suivant la revendication 8, caractérisé en ce que les postes (I, II, III) sont disposés en ligne et le dispositif de blocage peut être déplacé au moyen d'une broche aux autres mécanismes semblables.

10. Dispositif suivant la revendication 8, caractérisé en ce que les postes (I, II, III) sont disposés en carrousel et le dispositif de blocage peut être déplacé au moyen d'une chaîne, d'une couronne dentée, d'un mécanisme pas-à-pas, ou autres mécanismes semblables.

11. Dispositif suivant la revendication 10, caractérisé par plusieurs dispositifs de blocage.

12. Dispositif suivant les revendications 10 et 11, caractérisé par au moins un poste de refroidissement en aval du poste de soudage (III).

13. Dispositif suivant les revendications 10 à 12, caractérisé par un poste d'enlèvement en aval du poste de refroidissement.

14. Procédé pour faire fonctionner le dispositif suivant l'une ou plusieurs des revendications 1 à 12, qui consiste à bloquer, s'aidant des baguettes (4, 5) fixées sur la barre de soudage (1), ainsi que des deux parties du dispositif de centrage et de calibrage, les hémicoquilles sur la barre de soudage et, en relevant les baguettes de butées se trouvant dans la barre de soudage, à former des joints entre les bords longitudinaux se recouvrant, à introduire la bande à souder dans les joints et à presser les bords longitudinaux l'un sur l'autre en abaissant les peignes de soudage (10, 11) et à préparer le cordon de soudure par la chaleur fournie par la torche (27).

# Fig. 1

# Fig.2

# Fig.3